# EUROPEAN PATENT SPECIFICATION

(11) **EP 4 451 135 B1**
(45) Date of publication and mention of the grant of the patent: **03.09.2025**
(21) Application number: 23168999.3
(22) Date of filing: 20.04.2023
(51) Int. Cl.: G06F 15/78

(54) **CHIPLET ARRANGEMENT**
CHIPLET-ANORDNUNG
AGENCEMENT DE MICROPUCES

(43) Date of publication of application: 23.10.2024
(73) Proprietor: LTU Licens AB, 977 75 Luleå (SE)
(72) Inventor: Delsing, Jerker, 977 75 Luleå (SE); Paniagua, Cristina, 977 75 Luleå (SE); Sing Chouhan, Shailesh, 977 75 Luleå (SE)
(74) Representative: Ström & Gulliksson AB

(56) References cited:
- EP-A1- 3 734 453
- US-A1- 2021 117 578
- US-A1- 2022 327 061
- US-A1- 2023 077 631

## Description

### TECHNICAL FIELD

The present disclosure relates to chiplets. More precisely this disclosure relates to a microservice architecture of chiplet arrangements. Embodiments of the inventions include, e.g. chiplet arrangements and methods of configuring such chiplet arrangements.

### BACKGROUND

According to Moore's law, every two years the number of transistors in an integrated circuit (IC) doubles. However, due to high costs, the pace of silicon manufacturing improvement is decelerating, and it is increasingly challenging to commercially viable produce chips on smaller and smaller scales. The current development of monolithic chips not only faces economical limitations but also in terms of supply/demand, flexibility and competitiveness. Generally, from the early design phases, the chip is conceived without the possibility of future change or evolution. Hampering the reuse of hardware.

In response to this situation, chiplets have arisen as a promising solution. Generally, a chiplet is a modular semiconductor component that is configured to perform a specific function or subset of functions of a larger integrated circuit. A chiplet may be combined with other chiplets to form a more complex integrated circuit, offering greater flexibility in design and manufacturing.

The concept of chiplets has been around for several decades, with the first examples appearing in the 1980s. At that time, chiplets were primarily used for memory and I/O functions, and were mounted on separate packages that were connected to the main processor through a bus interface. In recent years, chiplets have gained renewed interest due to advances in semiconductor manufacturing technology and the increasing complexity of modem electronic devices. By breaking down a complex system or system-on-chip (SoC) into smaller, more manageable components, chiplets offer several advantages.

To facilitate the use of chiplets, industry groups and standards bodies have developed interfaces and protocols for connecting and communicating between chiplets. Examples include the chiplet Integration Interface (CII) from the Semiconductor Industry Association (SIA) and the Advanced Interface Bus (AIB) from the Open Compute Project (OCP). Chiplets are a promising approach to designing and manufacturing complex semiconductor devices, offering greater flexibility, efficiency, yield, scalability, optimized performance, and reliability.

The flexibility in design and manufacturing of chiplets facilitates provisioning of hardware that may be configured to perform a vast number of different task. However, a chiplet is an locked solution like creating PCBs serving a particular task or functionality. Although standardization work is progressing, the full potential of chiplets is yet to be exploited. EP3734453A1 discloses various approaches for deployment and use of configurable edge computing platforms. In an edge computing system, an edge computing device includes hardware resources that can be composed from a configuration of chiplets, as the chiplets are disaggregated for selective use and deployment (for compute, acceleration, memory, storage, or other resources). In an example, configuration operations are performed to: identify a condition for use of the hardware resource, based on an edge computing workload received at the edge computing device; obtain, determine, or identify properties of a configuration for the hardware resource that are available to be implemented with the chiplets, with the configuration enabling the hardware resource to satisfy the condition for use of the hardware resource; and compose the chiplets into the configuration, according to the properties of the configuration, to enable the use of the hardware resource for the edge computing workload.

### SUMMARY

It is in view of the above considerations and others that the various embodiments of this disclosure have been made. The present disclosure therefor recognizes the fact that there is a need for alternatives to (e.g. improvement of) the existing art described above.

It is an object of some embodiments to solve, mitigate, alleviate, or eliminate at least some of the above shortcomings or other disadvantages. To this end, a new type of chiplet arrangement is proposed. More specifically, an object of the invention is to provide a chiplet arrangement that is configurable and that may be utilized more efficiently than in the prior art. These objects are addressed by the technique set forth in the appended independent claims with preferred embodiments defined in the dependent claims related thereto.

In a first aspect, a chiplet arrangement is presented. The chiplet arrangement is controllable by an external communications interface. The chiplet arrangement comprises at least one chiplet connected to a chiplet network. The at least one chiplet comprises at least one hardware resource. The chiplet arrangement is provided with a chiplet control plane configured to orchestrate one or more microsystems. Each microsystem comprises at least one hardware resource and an addressable connection at the chiplet network. The chiplet control plane is further configured to expose one or more microsystems as microservices at the external communications interface.

In some variants, the chiplet arrangement comprises two or more chiplets connected by the chiplet network. This is beneficial as further chiplets enables further degrees of freedom in providing microsystems and microservices.

In some variants, the chiplet control plane is configured to configure instantiation of microsystems based on availability and/or utilization of hardware resource(s). This is advantageous as it allows optimization of utilization of resources (i.e. resource utilization ratio) thereby saving power consumption.

In some variants, the chiplet control plane is configured to configure instantiation of microservices based on availability and/or utilization of hardware resource(s). This is advantageous as it allows optimization of utilization of resources thereby reducing power consumption.

In some variants, the chiplet control plane comprises a resource orchestrator configurable to instantiate microsystems of the chiplet arrangement. The resource orchestrator provides advantages such as optimized, increased or improved resource utilization, automated management, improved scalability, flexible deployment, and high availability and resilience (to prolonged, varying and/or disruptive resource demand).

In some variants, the resource orchestrator comprises a preconfigured microsystem of the chiplet arrangement associated with one or more preconfigured microservices of the chiplet arrangement.

In some varaints, the resource orchestrator is further configurable to instantiate microservices associated with specific microsystems.

In some variants, each instantiated microsystem is configured to consume or produce one or more microservices associated with the microsystem.

In some variants, at least one microsystem is configured to consume or produce one or more microservices associated with the at least one microsystem.

In some variants, the chiplet control plane comprises a network manager configured to control communication between the microsystems and the external communications interface of the chiplet arrangement. This is advantageous as the network manager provides centralized control, improved network security, enhanced network performance and reliability, and simplified network administration.

In some variants, the network manager is a preconfigured microsystem of the chiplet arrangement associated with one or more preconfigured microservices of the chiplet arrangement.

In some variants, the control plane comprises a resource registry comprising data indicating at least some of the hardware resources of the chiplet arrangement. The resource registry is advantageous as it provides centralized visibility and management of resources, simplified resource discovery and allocation, and improved resource utilization and efficiency.

In some variants, the resource registry comprising data indicating all hardware resources of all chiplets of the chiplet arrangement.

In some variants, the control plane comprises a resource scheduler configured to schedule utilization of the resources. The resource scheduler is advantageous as it provides optimized resource allocation, improved resource utilization and performance, and automated management of resource allocation and scheduling.

In some variants, the resource scheduler is a preconfigured microsystem of the chiplet arrangement associated with one or more preconfigured microservices of the chiplet arrangement.

In some variants, at least one hardware resources is a network interface configured to connect the chiplet to the chiplet network.

In some variants, at least one hardware resources is a computational hardware resource such as a CPU, a GPU or a microcontroller.

In some variants, at least one hardware resource is a memory hardware resource such as a data storage unit, a volatile memory or a non-volatile memory.

In some variants, at least one hardware resource is a sensor hardware resource such as a data acquisition unit, a temperature sensor, a pressure sensor, a light sensor, an optical sensor or a fingerprint sensor.

In some variants, at least one hardware resource is a peripheral hardware resource such as an interrupt controller, a DMA controller, a Digital I/O, a DAC, an ADC or a clock.

In some variants, at least one hardware resource is a communication hardware resource such as an I2C interface, a PCIe interface or an UCIe interface.

In some variants, at least one hardware resource is an actuator hardware resource such as a loudspeaker, a buzzer, a light source or a display.

In some variants, each hardware resource provide at least one dedicated hardware functionality.

In some variants, the chiplet arrangement is a chiplet package forming part of an integrated circuit, IC.

In a second aspect, a method of configuring a chiplet arrangement according to the first aspect is presented. The method is performed by the control plane of the chiplet arrangement. The method comprises obtaining a request indicating a microsystem to be instantiated, and instantiating a microsystem according to the obtained request.

In some variants, the request comprises a resource recipe indicating one or more hardware requirement of the microsystem to be instantiated.

In some variants, the instantiating further comprises selecting hardware resources fulfilling the indicated hardware requirements, obtaining assigned scheduling data associated with the selected hardware resources.

In some variants, at least one of the hardware resources is selected as a computational hardware resource, and the request further comprises program instructions that, when executed by the selected computational hardware resource, instantiate the microsystem indicated by the request.

In some variants, the instantiating further comprises deploying the microsystem by execution of the program instructions by the selected computational hardware resource.

In some variants, instantiating of the microsystem is based on availability and/or utilization of hardware resources.

### BRIEF DESCRIPTION OF THE DRAWINGS

Embodiments of the invention will be described in the following; references being made to the appended diagrammatical drawings which illustrate non-limiting examples of how the inventive concept can be reduced into practice.
Fig. 1 is a schematic view of a chiplet arrangement according to some examples of the present disclosure;
Fig. 2 is a schematic view of a chiplet according to some examples of the present disclosure;
Fig. 3 is a schematic view of a microsystem associated with a microservice according to some examples of the present disclosure;
Fig. 4 is a schematic view of a chiplet arrangement according to some examples of the present disclosure;
Fig. 5 is a schematic view of a control plane according to some examples of the present disclosure;
Fig. 6 is a SysML sequence diagram of dynamic instantiation of a microsystem according to some examples of the present disclosure;
Fig. 7 is a SysML model of a resource security microsystem within a chiplet arrangement according to some examples of the present disclosure; and
Fig. 8 is a schematic view of a method of configuring a chiplet arrangement according to some examples of the present disclosure.

### DETAILED DESCRIPTION OF EMBODIMENTS

Hereinafter, certain embodiments will be described more fully with reference to the accompanying drawings. The invention may, however, be embodied in many different forms and should not be construed as limited to the embodiments set forth herein; rather, these embodiments are provided by way of example so that this disclosure will be thorough and complete, and will fully convey the scope of the invention, such as it is defined in the appended claims, to those skilled in the art.

Similarly, the term "connected", or "operatively connected", is defined as connected, although not necessarily directly, and not necessarily mechanically. Two or more items that are "coupled" or "connected" may be integral with each other. The terms "a" and "an" are defined as one or more unless this disclosure explicitly requires otherwise. The terms "substantially", "approximately" and "about" are defined as largely, but not necessarily wholly what is specified, as understood by a person of ordinary skill in the art. The terms "comprise" (and any forms thereof), "have" (and any forms thereof), "include" (and any form thereof) and "contain" (and any forms thereof) are open-ended linking verbs. As a result, a method that "comprises", "has", "includes" or "contains" one or more steps, possesses those one or more steps, but is not limited to possessing only those one or more steps.

For the present disclosure, a chiplet is a, commonly, tiny integrated circuit (IC) that comprises a well-defined subset of functionality. It is designed to be combined with other chiplets to form a chiplet arrangement. The chiplet arrangement may (but is not required to) be provided on a common interposer in a single package.

Chiplet arrangements have several benefits compared to e.g. large scale integrated circuits (ICs). As chiplet arrangements separate different functions into discrete chiplets, chiplet arrangements makes it easier to isolate and fix defects during manufacturing. This may lead to higher overall yield rates and lower costs. By mixing and matching different chiplets, designers are able to create custom chiplet arrangements in the form of system on chips (SoCs) that are optimized for specific applications. This may result in more efficient, higher-performing devices. By working with smaller, more manageable constitutional components in the form of chiplets, designers are able to iterate more quickly, and test individual constitutional components more thoroughly before integrating them into a larger system of a chiplet arrangement 100. The designers are further able to add on-fly or remove the component(s) from the SoC if needed. This, makes it comfortable to design engineers in scaling the performance and complexity of the overall system. Chiplets enables companies to take advantage of economies of scale and reuse existing chip designs, which reduces cost of new developments. Chiplets support a variety of applications ranging from high power (server in data centers) to battery-operated devices (smartwatch). The philosophy behind chiplet allows interoperability among different vendors of chiplets. This, leads to improved performance when compared with a single monolithic chip solution.

The configurability of chiplets from a hardware perspective have historically been isolated from a corresponding software configurability. A software functionality of a chiplet is generally limited to the functionality provided by each of the different chiplets. Each chiplet is addressed using a hardware abstraction layer (HAL), generally specific for each chiplet. In order to allow full flexibility of a chiplet and also to increase utilization of resources of a SoC, the inventors behind the present disclosure have realized that a chiplet, or a collection of chiplets, may be shared and utilized using a plurality of microservices.

Generally, microservices are a software architectural approach in which a large application is broken down into small, independent, and loosely coupled services that may be developed, deployed, and maintained separately. Each microservice typically performs a specific function (e.g. business function etc.) and communicates with other microservices via lightweight mechanisms such as HTTP or messaging protocols. This approach allows for faster and more efficient development, deployment, and scaling of the application, as well as increased resilience and fault tolerance. Microservices also enable teams to work independently on different parts of the application, with each team responsible for developing and maintaining their own microservice. This approach may improve overall development speed and reduce the risk of conflicts or dependencies between teams. Overall, microservices may provide greater agility, scalability, and reliability in large and complex information systems/computer systems.

Historically, microservices have been designed to be deployed as independent, lightweight components that can be run on a distributed system of commodity hardware. This allows for greater scalability and fault tolerance than running a monolithic application on a single server. One common hardware configurations for microservices are cloud-based infrastructures. A common choice is to deploy microservices in the cloud using services such as Amazon Web Services (AWS), Microsoft Azure, or Google Cloud Platform (GCP). These cloud providers offer a variety of services and tools for running and managing microservices, including container orchestration platforms like Kubernetes. Alternatively, microservices may be run on virtual machines (VMs) using hypervisors such as VMware or Hyper-V. This allows for greater flexibility in deploying and scaling microservices across different hardware configurations. In some cases, microservices may be deployed on edge devices such as internet of things (IoT) devices or embedded systems. This requires a lightweight runtime environment that can run on resource-constrained hardware.

It is generally agreed that microservices have evolved from service-oriented architecture (SOA), and a commonly considered as a subset of SOA. Microservices and SOA share many attributes, nonfunctional requirements, that are provided by the architecture and that are key for this work. To exemplify, systems are able to discover services at run-time, without the need to have their address fixed at design time. This is usually achieved through some type of service registry, where service producers advertise their offerings enabling consumers to find them even in dynamic environments. Generally, the services communicate only through designed APIs, holding the concepts of information hiding and encapsulation. In this way, services do not share dependencies with each other and can be modified, internally, as needed without impacting the behavior of other services. Further to this, service exchanges commonly happen at run-time and may change based on present conditions. Therefore, services do not need to be aggregated pre-deployment, as in early binding, enabling application self-healing and optimization in the execution environment. These capabilities require more logic that can be added to each system or delegated to a mediator that will organize the network.

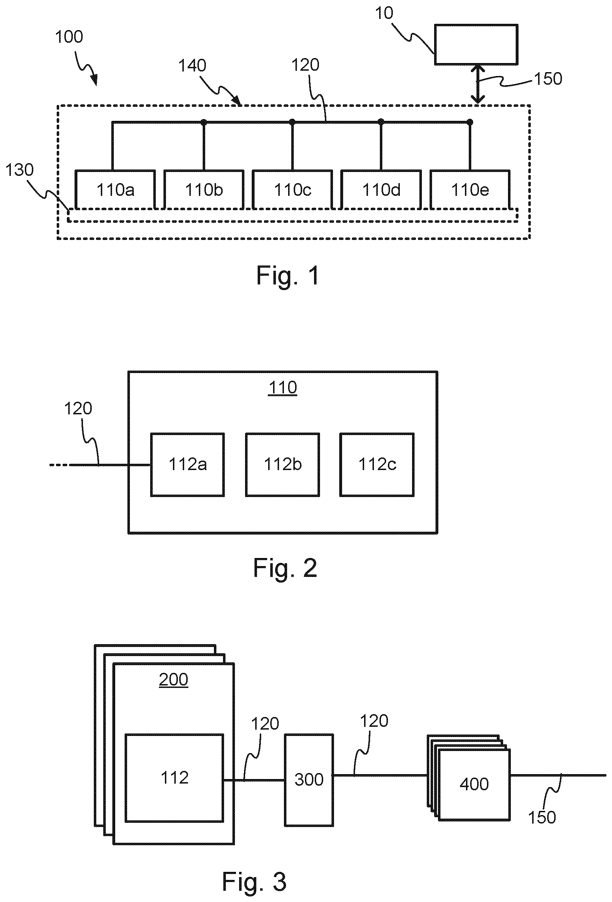

In Fig. 1, a simplified view of a chiplet arrangement 100 is shown. The chiplet arrangement 100 comprises a plurality of chiplets 110a, 110b, 110c, 110d, 110e. The chiplet arrangement 100 in Fig. 1 is disclosed to comprise a plurality of chiplets 110a, 110b, 110c, 110d, 110e, i.e. two or more chiplets, but the skilled person will appreciate that a chiplet arrangement 100 may sometimes include one single chiplet 110a, 110b, 110c, 110d, 110e. The chiplets 110a, 110b, 110c, 110d, 110e are connected by a chiplet network 120 enabling communication between the chiplets 110a, 110b, 110c, 110d, 110e. The chiplet arrangement 100 is controllable by an external interface 150 enabling the chiplet arrangement 100 to control, be controlled by or otherwise interact with one or more external systems 10. The chiplets 110a, 110b, 110c, 110d, 110e of the chiplet arrangement 100 may all be arranged on a common interposer 130 and optionally form a chiplet package 140. In other examples of the present disclosure, the chiplet arrangement 100 many comprise a number of chiplets 110a, 110b, 110c, 110d, 110e arranged on different interposers 130 and/or forming different chiplet packages 140. Regardless of the arrangement or the number chiplets 110a, 110b, 110c, 110d, 110e, the chiplets 110a, 110b, 110c, 110d, 110e are connected by the chiplet network 120. A chiplet arrangement 100 according to the present disclosure may be referred to as one of more of a multi-chip module (MCM), hybrid IC, 2.5D IC, or an advanced package.

The chiplet network 120 may be any suitable network or corresponding connection that enables communication between the chiplets 110a, 110b, 110c, 110d, 110e, and/or between chiplets 110a, 110b, 110c, 110d, 110e and the external interface 150. In some examples the chiplet network 120 may be a network configured according one or more network standards such as UCIe, Bunch of Wires (BoW), OpenHBI, or OIF XSR. The chiplet network 120 is not necessarily formed of one physical or virtual network but may be a combination of one or more physical networks and/or one more virtual networks. This will be further explained in later sections.

In Fig. 1, the chiplet arrangement 100 is shown comprising five chiplets 110a, 110b, 110c, 110d, 110e. This is for illustrative examples only and the skilled person will appreciate that the chiplet arrangement 100 may comprise any number of chiplets 110a, 110b, 110c, 110d, 110e. In fact, as mentioned and as will be apparent after digestion of the complete disclosure, the teachings presented herein are applicable also on a single chiplet 110a, 110b, 110c, 110d, 110e.

The skilled person will appreciate that the chiplets 110a, 110b, 110c, 110d, 110e, chiplet arrangements 100 and other features presented herein may be presented in a simplified and/or condensed form in order to make the present disclosure as efficient as possible. For instance, the chiplet arrangement 100 of Fig. 1 will generally require some form of power distribution in order to provide and/or control power to the chiplets 110a, 110b, 110c, 110d, 110e. Such features and configurations are well known to the skilled person and need not be further explained.

In Fig. 2, an exemplary simplified block diagram of a chiplet 110 is shown. The chiplet 110 comprises at least one hardware resource 112a, 112b, 112c. The chiplet 110 of Fig. 2 is shown with three hardware resources 112a, 112b, 112c, but any number of hardware resources is applicable. At least one of the hardware resources 112a, 112b, 112c of the chiplet 110 is addressable at the chiplet network 120. To this end, a first hardware resource 112a may be a network interface hardware resource configured to connect the chiplet 110 to, and communicate via, the chiplet network 120. A second hardware resource 112b may be a computational hardware resource such as a CPU, a GPU or a microcontroller. A third hardware resource 112c may be a data storage unit, i.e. a memory hardware resource such as a volatile memory or a non-volatile memory. A chiplet 110 comprising a network interface hardware resource, a computational hardware resource and a memory hardware resource may be considered a minimum chiplet 110. However, not all hardware resources 112a, 112b, 112c may be addressable across the chiplet network 120, and from a perspective of the chiplet arrangement 100, a specic chiplet 110 may comprise only a computational hardware resource as an only addressable resource of that specific chiplet 110.

The chiplet 110 may comprise further hardware resources 112a, 112b, 112c such as, but not limited to, sensor hardware resources. Sensor hardware resources, i.e. data acquisition units, may be exemplified as a temperature sensor, a pressure sensor, a light sensor, an optical sensor, a voltage sensor, a fingerprint sensor etc. Additionally, or alternatively, the chiplet 110 may comprise hardware resources 112a, 112b, 112c in the form of peripheral hardware resources. Peripheral hardware resources may be exemplified as, but not limited to, an interrupt controller, a DMA controller, a digital/analog I/O, a DAC, an ADC, a clock, a peripheral I/O device, a peripheral storage device, a peripheral display devices, a peripheral communication devices, etc. Additionally, or alternatively, the chiplet 110 may comprise hardware resources 112a, 112b, 112c in the form of a communication hardware resource. Communication hardware resources may be exemplified as, but not limited to, a PCIe interface or an UCIe interface. Additionally, or alternatively, the chiplet 110 may comprise hardware resources 112a, 112b, 112c in the form of an actuator hardware resource. Actuator hardware resources may be exemplified as, but not limited to, a loudspeaker, a buzzer, a switch, a light source, a display etc.

The inventors behind the present disclosure have realized that, not only may microservices be deployed and executed by chiplets 110, the chiplets 110 themselves may be managed and controlled correspondingly to microservices. That is to say, hardware resourses 112 of a chiplet 110, or a plurality of chiplets 110, may be configured to form a microsystem 200, see Fig. 3.

In Fig. 3, a microsystem 200 according to the present disclosure is shown. The microsystem 200 provides a behavior based on stored, or obtained data and computation thereupon. The resulting capabilities are externally exposed through one or more produced microservices 400. A microsystem 200 is composed of (e.g., comprises, configured with) one or more hardware resources 112 that execute one to several tasks and processes to form the functionality. A specific microsystem 200 may be associated with one or more hardware resources 112 from one specific chiplet 110 of the chiplet arrangement 100, or associated with hardware resources 112 from two or more chiplets 110 of the chiplet arrangement 100. As will be taught in later sections, microsystems 200 may be dynamically instantiated and subsequently re-worked at runtime. Thus enabling flexible use and reuse of engaged hardware resources 112. The microsystem 200 may comprise configurable or static software (program instructions) stored by and executable by the hardware resource(s) of the microsystem 200. It should be mentioned that microsystems 200 defined solely by the hardware resources 112 and that provide the desired functionality without requiring software.

Orchestration of the microsystem(s) 200 is provided by a control plane 300. The orchestration by the control plane 300 of one or more microsystems 200 may comprise, but is not limited to, managing microsystems 200, coordinating the deployment of microsystems 200, scaling microsystems 200, and/or control operation of microsystems 200. The control plane 300 is advantageously further configured to orchestrate microservices 400 exposed at the external communications interface 150. The orchestration by the control plane 300 of one or more microservices 400 may comprise, but is not limited to, managing microservices 400, coordinating the deployment of microservices 400, scaling microservices 400, and/or control operation of microservices 400. The control plane 300 is further advantageously configured to orchestrate binding (association) between a specific microsystem 200 and one or more microservices 400.

Advantageously, the microservices 400 are registered at an external resource reigistry associated with the external system 10. The registration of the microservices 400 at the external resource reigistry of the external system 10 may be provide by the control plane 300. One or more microsystems 200 may be provided with software instructions enabling the one or more microsystems 200 to register (through the control plane 300) their associated microservices 400 at the external resource reigistry of the external system 10.

The control plane 300 may be formed as a centralized control plane and will generally be described as such. However, it should be emphasized that the present disclosure is applicable also, without limitation, to de-centralized or distributed implementations of the control plane 300.

To exemplify the functionality of the control plane; the control plane 300 may be configured to discover and manage available hardware resources 112 and microsystems 200. This implies monitoring resource usage and availability, as well as allocating and deallocating resources as needed. The control plane 300 may, additionally, or alternatively, be configured to deploy and manage microservices 400 on the available hardware resources 112 by their associated microsystem 200. This implies ensuring that each microservice 400 is deployed to an appropriate location and that it may communicate with other microservices 400 as needed. The control plane 300 may, additionally, or alternatively, be configured to provide service scaling. That is to say, as demand for a particular microservice 400 increases or decreases, the control plane 300 may be configured to scale the microservice 400 up or down accordingly. This may involve adding or removing instances of the microservice 400, and/or adjusting the microsystem allocated to each instance of the microservice 400. The control plane 300 may, additionally, or alternatively, be configured to provide health monitoring of the chiplet arrangement 100. This may comprise monitoring a health of each microservice 400, and/or microsystem 200 and to detecting and advantageously respond to failures or other issues as they arise. This may involve performing automated health checks, restarting failed microsystems 200 and/or microservices 400 and/or triggering alert notifications when issues occur. The control plane 300 may, additionally, or alternatively, be configured to manage updates to the microservices 200 and/or microsystems 400, in order to ensure that new versions of the services are deployed and rolled out in a controlled and safe manner.

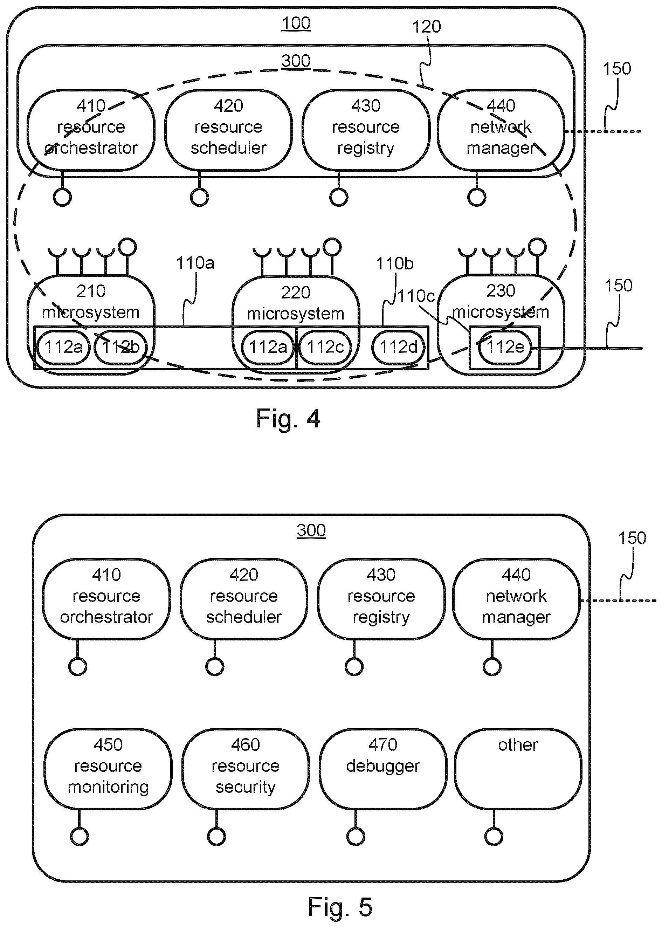

Using an SOA approach in providing the control plane 300, the control plane 300 may be created by a set of microsystems 200 with associated microservices 400. This is schematically shown in Fig. 4. It may be assumed that the control plane 300 is instantiated and executed locally at each chiplet arrangement 100.

With reference to Fig. 4, an exemplary embodiment of a chiplet arrangement 100 comprising an advantageous control plane 300 will be presented. In Fig. 4, the control plane 300 comprises a resource orchestrator 410. The resource orchestrator 410 may be configured for orchestrating and coordinating the integration and instantiation of microsystems 400 and their produced and consumed microservices 200. A microsystem integration may be requested through the resource orchestrator 410 exposed as an associated microservice 410 at the external communications interface 150. Such integration requests may indicate which hardware resources 112 of the chiplet arrangement 100 to integrate and, if applicable, provide any suitable microsystem executable code. In addition, lifetime data ranging from the completion of the first service request to a maximum lifetime may be provided. The maximum lifetime may be determined determined by e.g. edge or cloud-located ServiceRegistry and SystemRegistry to which the microsystem may have to register. If necessary advanced security on-boarding schema may be deployed, this will be further explained in later sections. It should be mentioned that microsystems 200 of the chiplet arrangement 100 are not necessarily static. That is to say, the microsystems 200 may be formed in a static structure, a dynamic stucture, a fluid structure, a flexible layout, an evolving compositions or combinations thereof. Orchestration of microsystems 200 may be dynamically renewed, updated, or changed through new requests to the resource orchestrator 410. The resource orchestrator may provide orchestration information to a network manager 440 of the control plane 300. This may be provided in order to configure suitable communication between integrated hardware resources 112. A service integration request will generally integrate and instantiate a microsystem 200 composed of a set of prescribed hardware resources 112 e.g. CPU, Timer, Memory, ADC, etc.

The resource orchestrator 410 may comprise a preconfigured microsystem 200 of the chiplet arrangement 200 assoiciated with one or more preconfigured microservices 410 of the chiplet arrangement 100. That is to say, the resource orchestrator may be preconfigured. In Fig. 4, the resource orchestrator 410 is shown as a microservice 400. The skilled person will understand that this microservice 410 is associated with a specific microsystem 200. The microservice 400 will be exposed by the control plane 300 and the control plane 300 will provide an interface between the microservice 400 and a specific microsystem 200.

**In** Fig. 4 the control plane 300 is further shown comprising a resource scheduler 420. The resource scheduler 420 may be provided to ensure a timely availability of a desired microsystem 200. Scheduling of the hardware resources is advantageous in order to achieve a requested performance and obtaining a maximum benefit out of a potential of the chiplet arrangement 100. The resource scheduler is advantageously configured to balance a strict real-time requirement with other types of priorities and/or policies. The skilled person will appreciate that such scheduling is dependent on application strategies, policies regulations, etc. A wide range of such scheduling algorithms are available and have been previously published. S. Singh and I. Chana, "A survey on resource scheduling in cloud computing: Issues and challenges," Journal of Grid Computing, no. DOI 10.1007/s10723-015-9359-2, pp. 217-264, 2016.
Z.-H. ZHAN, X.-F. LIU, Y.-J. GONG, J. ZHANG, H. S.-H. CHUNG, and Y. LI, "Cloud computing resource scheduling and a survey of its evolutionary approaches," ACM Computing Surveys, vol. 47, no. 4, July 2015.
M. Kumar, S. C. Sharma, A. Goel, and S. P. Singh, "A comprehensive survey for scheduling techniques in cloud computing," Journal of Network and Computer Applications, vol. 143, pp. 1-33, 2019. From this, resource scheduling may be considered an engineering optimization problem and will not be further detailed in the present disclosure.

It should be mentioned that the resource scheduler 420 may reside either internally or externally to the chiplet arrangement 100. In Fig. 4, it the resource scheduler 420 is shown as internal to the chiplet arrangement 100 but this in one alternative and other implementation may be considered depending on application.

As for the resource orchestrator 410, the resource scheduler 420 may be preconfigured. In Fig. 4, the resource scheduler 420 is shown as a microservice 400, but the skilled person will understand that this microservice 420 is associated with a specific microsystem 200.

The exemplary control plane 300 in Fig. 4 comprises a resource registry 430. The resource registry 430 may be configured to store data pertaining to the hardware resources 112 of the chiplet arrangement 100. Advantageously, the data comprises information indicating one or more of a resource ID of each hardware resource 112, a physical address of each hardware resource 112 of the chiplet arrangement 100 and/or an electrical address of each hardware resource 112 of the chiplet arrangement 100. The resource registry may comprise further data associated with hardware resources of the chiplet arrangement 100, such a resource specification, configurations data and/or meta data. This data is generally generated at design time and advantageously deployed to the resource registry 430 at a chiplet production time. It should be mentioned that the resource registry 430 is not required to comprise data associated with all hardware resources 112 of the chiplet arrangement 100.

In the chiplet arrangement 100 of Fig. 4, the control plane 300 further comprises a network manager 440. The network manager 440 is advantageously configured to dynamically configured network connections of the chiplet arrangement 100. That is to say, the network manager 440 is configured to create communication channels suitable for the microsystems 200 of the chiplet arrangement. The network manager may be configured to interface with a variety of bus technologies, such as, but not limited to, PCI or UCPI. The network manager 440 may further be configured to communicate with a variety of components (hardware resources 112, chiplet network 120, external communications interface 150 etc.) of the chiplet arrangement 100. Advantageously, each chiplet 110 and instantiated microsystem 200 are identified at the external communications interface 150 exposing their associated microservices 400. The network manager is advantageously configured to ensure efficient and reliable communication between internal devices of the chiplet arrangement 100 and between internal devices of the chiplet arrangement 100 and devices external to the chiplet arrangement 100. This may involve measure such as implementation of efficient protocols for transmitting data over the chiplet network 120, minimizing latency, and/or maximizing bandwidth. Further to this, implementation of error correction mechanisms, flow control mechanisms, and mechanisms for handling errors and exceptions may be provided in order to increase efficiency and reliability in communication.

As for the resource orchestrator 410, the network manager 440 may be preconfigured. The microservice 400 will be exposed by the control plane 300 and the control plane 300 will provide an interface between the microservice 400 and a specific microsystem 200. This is illustrated in Fig. 4 by the network manager 440 (the microservice 200 of the control plane) provide an external communications interface 150 on an application level (dotted line in Fig. 4). The physical connection of the external communications interface 150 is provided by a suitable hardware resource 112e which is comprised in a microsystem 230 (solid line in Fig. 4). In Fig. 4, the network manager 440 is shown as a microservice 400, but the skilled person will understand that this microservice 440 is associated with a specific microsystem 200.

The chiplet arrangement 100 pf Fig. 4 is an exemplary chiplet arrangement 100 and the features described in reference to Fig. 4 are optional an may be freely combined with each other or any other features described herein.

With reference to Fig. 5, some further exemplary microservices 400 will be presented. In Fig. 5, the control plane 300 of the chiplet arrangement 100 comprise a resource monitor 450 associated with a specific microsystem 200 (not shown in Fig. 5). The resource monitor 450 may be configured to capture a status of a large variety of hardware resource 112 and their current and/or specified capabilities. Consequently, status types and capability types are advantageously part of the metadata registered for each hardware resource 112 in the resource registry 430. The transfer of such status data may be provided by electrical communication or/and through a monitoring microservice request. The resource monitor 450 may be configured to provide access to historical data. Historical data may be accessed in order to proceed e.g. predictive maintenance, optimization etc. Advantageously, the historical data is available only for a limited time, generally determined by a capacity of a storage in relation to an amount of historic data that is generated. The resource monitor 450 advantageously reside in the chiplet arrangement 100 in order to enable appropriate monitoring of its hardware resources 112.

In Fig. 5, the control plane 300 of the chiplet arrangement 100 further comprise a resource security microservice 460 associated with a specific microsystem 200 (not shown in Fig. 5). Generally, some form of security is advantageous in most applications. Dependent on application requirements and hardware capabilities chiplet security measures of interest may comprise one or more of physical tampering detection, encryption of data transferred over the chiplet electrical communication (chiplet network 120 etc.), secure on-boarding of software, enabling e.g. over the air (OTA) software updates, secure on-boarding of hardware, etc. Such security issue detection and actions are advantageously initiated and monitored by the resource security microservice 460. Advantageously, any available security issue detection and action types offered by the resource security microservice 460 may form part of the metadata registered in the resource registry 430.

Fig. 5, the control plane 300 of the chiplet arrangement 100 further comprise a debugger 470 with an associated microsystem 200 (not shown in Fig. 5). The debugger 470 is advantageous in order to support e.g. test and validation of the chiplet arrangement 100, the control plane 300 and instantiated microsystems 200. The debugger 470 may be configured to trace the execution of software instructions in real-time, allowing developers to identify potential issues with hardware access, timing, and/or synchronization. The debugger 470 may be configured to monitor memory access in real-time, allowing developers to detect and diagnose issues with memory corruption, buffer overflows, or other memory-related issues. The debugger 470 may be configured to inspect values of hardware registers of one or more hardware resources 112 in real-time, allowing developers to diagnose issues related to hardware configuration or control. The debugger 470 may be configured to set breakpoints and/or watchpoints at specific points in program instructions or at memory addresses, allowing developers to halt execution and inspect the system state at critical points. The debugger 470 may be configured to provide detailed performance profiling information, allowing developers to identify performance bottlenecks and optimize code for better hardware utilization.

As mentioned, the above exemplified microservices 400 and associated microsystems 200 are provided for explanatory purposes and should in no way be construed as limiting. As indicated in Fig. 5, the control plane 300 may very well comprise other microservices 200 with associated microsystems 200. The examples presented in reference to e.g. Figs. 4 and 5 may freely combined with each other.

Generally, dynamic instantiation refers to an ability to create and configure instances of a design or component during run-time. In the present disclosure and associated architecture, it refers to an ability to dynamically create and configure instances of microsystems 200. The use of dynamic instantiation will allow for flexibility and scalability in system design, as it allows for the creation of customized microsystems 200 on demand and may further reduce costs by allowing for the reuse of existing chiplets 110. To this end, the chiplet arrangement 100 is advantageously configurable to host one or several microsystems 200. Each microsystem 200 is configured to produce and/or consume one or more microservices 400. Advantageously, such microsystems 200 are configured to instantiate dynamically during run-time. To enable such instantiating the chiplet arrangement 100 may be configured to expose its hardware resources 112 and their allocation to integrated microsystems and their current usage status/availability.

Consequently, in order to instantiate a microsystem 200, the chiplet arrangement 100 is advantageously configure to, in run-time, dynamically integrate the chiplets 110 and necessary program instructions to form micro systems 200. In addition, the architecture allows for the usage of resources allocated to microsystems that are not in operation. This is provided by the control plane 300 of the present disclosure.

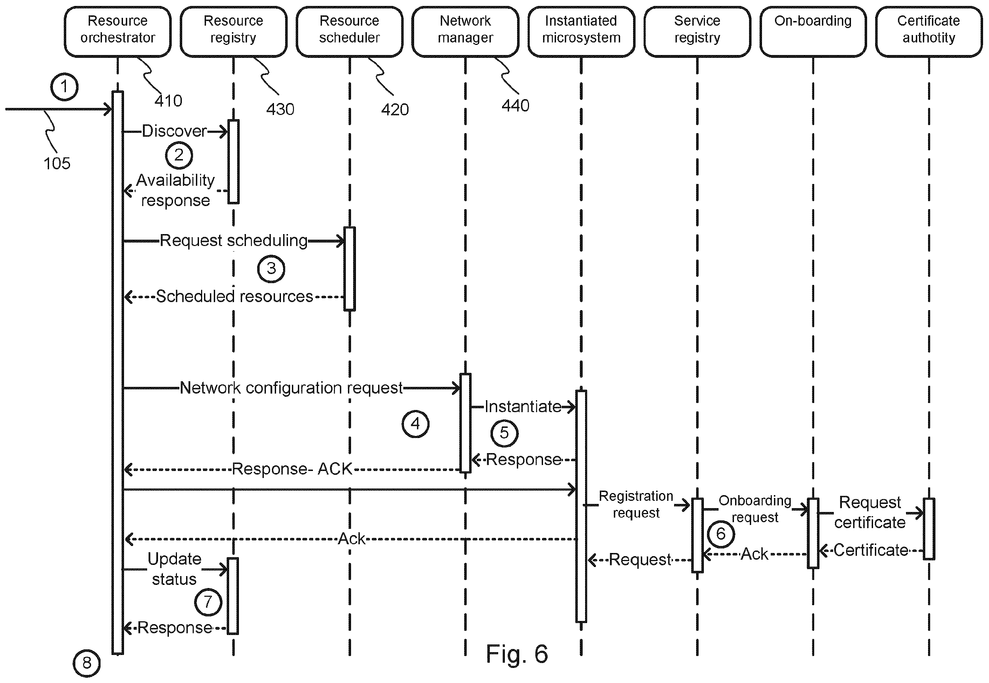

With reference to Fig. 6, an exemplary process of dynamic instantiation of a microsystem will be explained. Fig. 6 shows a Systems Modeling Language (SysML) sequence diagram. As is known to the skilled person, a SysML diagram is a type of diagram that shows the interactions between system components or actors over time. In Fig. 6, interactions between system components or actors are shown as a series of events, with arrows indicating the flow of control between them. The events are organized along a timeline, with time progressing from top to bottom. The sequence is started by obtaining an integration request, this is indicated by the arrow at the upper left corner of Fig. 6. The process will be explained in the following.
(1) The resource orchestrator 410 receives the service request with a microsystem recipe 105. The microsystem recipe 105 comprises data required to instantiate a new microsystem 200 and its microservice 400. Such data may be indicative of e.g. scheduling conditions, program instructions, configuration parameters, policies, a security certificate etc.
(2) The resource orchestrator 410 queries the resource registry 430 for available hardware resources 112 that match the microsystem recipe 105. The resource orchestrator 410 examines the list of the resources available and selects the ones that fulfill the requirements for that specific microsystem recipe 105. This portion of the process is provided to ensure that the selected hardware resources 112 are available and meet the requirements of the microsystem recipe 105, thereby making possible their composability.
(3) After determining a selection of hardware resources 112 that will conform to the requirements of the microsystem recipe 105, the resource orchestrator 410 requests to the resource scheduler 420 the assignation of scheduled time and slots. This may comprise tasks such as resource scheduling, prioritization, etc.
(4) The result of the operations of the resource scheduler 420 provide microsystem deployment data. The microsystem deployment data is provided to the network manager 440. The network manager 440 is configured to, based on the microsystem deployment data, deploy a communication integration between the orchestrated hardware resources 112 and commence execution of the instantiated microsystem 200. This deployment will be configured to last for the lifetime requested in the resource recipe.
(5) The microsystem 200 may be deployed responsive to the resources being configured with the parameters indicated in the microsystem recipe 105 and the program instructions are executed by a processing circuit (hardware resource 112 in the form of a processing circuit). Advantageously, the deployment is performed responsive to the hardware resources 112 have been scheduled and the chiplet network 120 has been set up for them.
(6) The instantiated microsystem 200 is advantageously tested before being determined to be ready for use. Tests may be performed in order to ensure that overall operation of the microsystem is in accordant with the service request and microsystem recipe 105.
(7) If the test results are positive, the microsystem 200 is set and a registry update is sent to the resource registry 430 to list and store the information about the microsystem 200, microservices instances, and the hardware resources 112 used for this task.
(8) Responsive the microsystem 200 being on-boarded, microservice operation may start.

As exemplified with the process in Fig. 6, operation and utilization of a microsystem 200 may commence responsive to the deployed microsystem 200 reaching a stationary state. At the stationary state, the microsystem 200 is configured as required and provided with necessary software for use of the microsystem, Once the intended microsystem(s) 200 are instantiated, the microservice(s) 400 associated with the microsystem(s) 200 are exposed on the external communications interface 150 and/or the chiplet network 120 and available for use. From the above, an architecture that enables hardware capabilities to be exposed as a set of microservices 400 that may be dynamically updated and extended given current needs of the chiplet arrangement 100. The operation of the available microservices 400 may comprise management of a number of dimensions, such as functionality, security, maintenance, evolution, reengineering and deployment.

Microservices 400 are exposed on the chiplet network 120 and/or the external communications interface 150 through the network manager 440. The network manager 440 is advantageously configured to provide the chiplet arrangement 100 with an IP address making it reachable at the external communications interface 150. The network manager 440 is advantageously configured to provide capabilities to also communicate locally with other chiplets 110 in the same chiplet arrangement 100. The control plane 300 allows the orchestration and registry of the microservices 200. The control plane is based on SOA principles; a well-established technology, therefore, is only briefly covered here.

System of Systems (SoS) functionality refers to collective behavior and capabilities of a group of interconnected software systems, which together form a larger, more complex system. SoS functionality is concerned with how these individual systems work together to achieve a common goal or set of goals, and how they communicate and share information in order to achieve this. This comprises issues such as interoperability, data exchange, and system integration. SoS functionality is generally important in large-scale software systems, where multiple independent systems need to work together in order to achieve a common objective. As the skilled person appreciates, effective SoS functionality requires careful design and planning, as well as robust communication protocols and system interfaces to ensure that each system is able to interact effectively with the others.

To integrate the chiplet arrangement 100 into a SoS functionality, the foundational look-up, loosely coupled and late binding properties of the SOA are advantageously supported by the SoS functionality. Eclipse Arrowhead architecture is commonly known and provides a basic control plane meeting SOA principles like look-up, late binding, loose coupling, and security measures e.g. authentication, authorization, etc., and optional other security measures. As an example the basic control plane capabilities are provided in the Eclipse Arrowhead architecture reference implementation by the mandatory microsystems ServiceRegistry system (look-up), Orchestration system (late binding, loosely coupled) and Authorisation system (authorization, authentication). The SoS functionality may provide these features by (based on Eclipse Arrowhead terminology):
- a ServiceRegistry and an associated ServiceDiscovery microservice
- an Orchestration system and its associated Orchestration microservice, i.e. the resource orchestrator 410 and its associated microsystem 200.
- AA security (Authenticating, Authorisation) may be provided by an Authorization system and an associated microservice GetPublicKey.
- Additional control plane 300 services like e.g. on-boarding security, interoperability translators and adaptors, workflow management and execution, "Workflow management solutions based on microservices," Applied Sciences. autonomous SoS maintenance and re-engineering. A. N. Lam, O. Haugen, and J. Delsing, "Dynamical orchestration and configuration services in industrial iot systems: An autonomic approach," IEEE Open Journal of the Industrial Electronics Society, vol. 3, pp. 128-145, 2022.

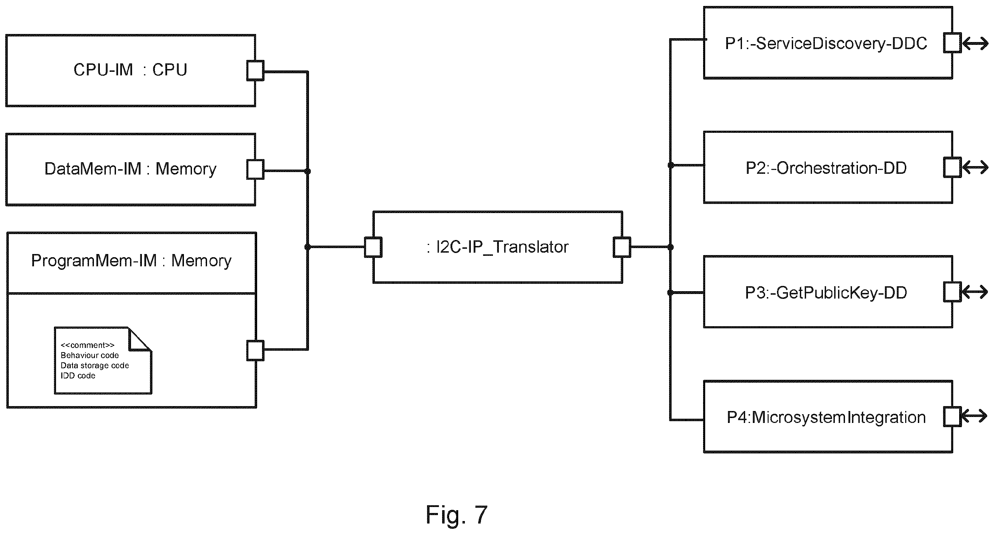

Some details of how these above microservices are consumed by the chiplet microsystems are exemplified by the SysML model shown in Fig. 7. Fig. 7 shows an exemplary implementation of a ResourceSecurity microsystem within a chiplet arrangement 100. In the example of Fig. 7, the ResourceSecurity microsystem's capability of consuming exemplary ServiceDiscovery, Orchestration and GetPublicKey microservices which are advantageous to the control plane 300.

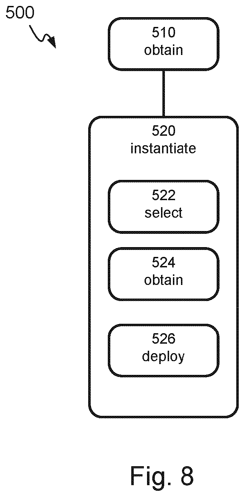

With reference to Fig. 8, a method 500 of configuring a chiplet arrangement 100 will be presented. The chiplet arrangement 100 may be any chiplet arrangement 100, configured with any chiplets 110 and/or features presented herein with reference to any figure or example. The method 500 is advantageously performed by the control plane 300 of the chiplet arrangement 100. The method 500 comprises obtaining 510 a request, e.g. a service request, indicating a microsystem 200 to be instantiated. The microsystem 200 may be indirectly indicated by indicating specific functionality that the microsystem 200 should be configured to perform. Alternatively, the microsystem 200 may be directly indicated by specifying specific hardware resources 112 that should form the microsystem 200. It may be that one portion of the microsystem 200 is indication indirectly and another portion of the microsystem 200 is indicated directly. Advantageously, the request comprises a resource recipe 105 indicating one or more hardware functions, required by the microsystem 200. The hardware function may be directly indicated by specifying one or more specific hardware resources 112.

The method 500 further comprises instantiating 520 a microsystem 200 according to the obtained request. The instantiating 520 may further comprise selecting 522 one or more hardware resources 112 fulfilling hardware requirement indicated by the request and obtaining 524 of assigned scheduling data associated with the selected hardware resources 112. Advantageously, the request (e.g. the resource recipe 105) further comprises program instructions. These program instructions may be adapted for at least one of the one or more indicated hardware resources 112 (hardware functions), and configured to, when executed by the hardware resource(s) 112, instantiate the microsystem 200. To this end, the instantiating 520 further comprises deploying 526 the microsystem 200 by execution of the program instructions by the hardware resource(s) 112.

As previously indicated, the control plane 300 and the chiplet arrangement 100 of the present disclosure allows for unparalleled flexibility in the instantiation of microsystems 200 and associated microservices 400. The instantiation of microsystems 200 and/or microservices 400 may be based on availability and/or utilization of hardware resource 112. This enables control plane 300 of the chiplet arrangement 100 to optimize utilization of the hardware resources 112 based on any measurable parameter. To exemplify, the control plane 300 may comprise a reward driven agent that may control instantiation, reconfiguration and/or discontinuation of microsystems 200 and/or microservices 400. The ability of the chiplet arrangement 100 to be reconfigured enables the chiplet arrangement 100 to adapt and change in response to new information or changes in its environment. This may be referred to as adaptive hardware, flexible hardware, reconfigurable hardware, or a plastic system. A plastic system is able to modify its behavior, structure, or function in order to accommodate new inputs or demands, without necessarily undergoing permanent changes. Plasticity is often associated with systems that have a high degree of flexibility and adaptability, such as biological systems, cognitive systems, or neural networks. These systems are able to learn from experience, reorganize their structure, and modify their behavior in response to new inputs or stimuli. Overall, the plasticity of a system is a key factor in its ability to cope with changing conditions or demands, and can be a critical determinant of its overall functionality and success. The chiplet arrangement 100 of the present disclosure provides plasticity to hardware.

The following is general architecture analysis of what has been presented herein. The proposed architecture introduced in the previous sections may be consireded a theoretical framework for design and development of the future of electronic systems. In order to demonstrate its feasibility, the following sections analyzes the most relevant aspects of its implementation and presents solutions based on currently available technologies. The service request triggers the instantiation of a microsystem 200. It is an advantageous piece of the integration of the hardware resources 112 since it comprises the information required to set up, configure and test the microsystem 200. The request may be sent via an interface from the outside of the chiplet arrangement 100 to the resource orchestrator 410 that starts the instantiation. The request comprises the resource recipe 105 as presented herein. The request may further comprise the code (program instructions, software, software code) and instructions necessary to set up the microsystem 200 and provide the necessary computation. The code is adapted to the CPU type stated in the resource recipe 105. The request may further comprise configuration parameters. Hardware resources 112 generally require configuration parameters. The request may include a list of parameters associated with each hardware resource 112. Examples of parameters are sample rate, time, accuracy, etc. The request may further comprise one or more policies. In addition to the configuration parameters, other types of generic policies that need to be fulfilled may be comprised in the request. Policies govern the operation of the chiplets 110. These policies may be set by a system administrator, other authorized personnel, or a system developer. The architecture presented herein is exemplified based on the use of policies to address orchestration, composability, security, Quality of Service (QoS), prioritization, and resource management. Policies may be communicated to the Monitoring system to ensure their enforcement over time. The request may further comprise tests. Tests are an advantageous part of dynamic instantiation. They are provided to ensure that the microsystem operation has the desired capabilities and functionality. More details about the types of tests that need to be included are in the following sections. The same service request may be re-used to configure several chiplets 110 or chiplet arrangements 100.

To achieve a successful dynamic instantiation resource availability is advantageously carefully considered. During the first steps of the instantiation, the resource registry 430 may be utilized to determine whether a composability is possible based on the requirements stated in the resource recipe 105 and the availability of the hardware resources 112 in the chiplet arrangement 100. The resource registry 430 advantageously comprises the hardware resources 112 available at a specific moment in time, the type of hardware resources 112, and their technical characteristics. This information may be cross-referenced and the required resources are selected. In case some of the resources are not available, several options may be configured. If the type of resource is not available, the microsystem 200 cannot be instantiated. There are at least two solutions to this problem, (i) termination of the microsystems 200 based on predefined criteria such as priority setting, usability of data etc. or (ii) the use of queues. The instantiation may be put on hold until the hardware resources 112 are released. The resource scheduler 420 may be queried to obtain the life expectance of the microsystems 200 and take an informed decision. The information about the hardware resources may be stored in the resource registry 430 when the chiplet arrangement 100 is built (produced, manufactured, marketed, installed). Internal components of the chiplet arrangement 100 remain the same over time, only their configuration and composability change with the use of microsystems 200. Hence, the resource registry 430 may comprise all the necessary information to determine if the composability between hardware resources 112 is possible and if it fits an expected service capability.

Network management is one of the aspects of the presented architecture. Microservice architecture is designed to operate in a wireless open network where all-to-all connections are possible. Nevertheless, in a chiplet arrangement 100 the network faces numerous constraints and restrictions. In addition, the nature of chiplet arrangement 100 involves managing the network between chiplets 110 to provide the integration of smaller independent chips into a larger chiplet arrangement 100. To demonstrate the feasibility of the approach and analyze the potential limitations of current technologies two approaches are presented.

A first approach comprises peripheral component interconnect (PCI). The PCI bus is a standard bus architecture that provides a high-speed communication channel between the processor and other peripherals. The PCI bus may be used as a communication network between chiplets 110 and other components of the system. The network manager 400 would consequently act as a PCI bus master, initiating transactions on the bus and managing data transfers between the chiplets and other components.

A second approach comprises Universal Chiplet Interconnect (UCPI). UCPI is a highspeed, low-latency interconnect technology specifically designed for chiplets 110. The network manager 440 would in this approach act as the UCPI controller, managing communication between the chiplets 110 and other components of the system.

Regardless of the specific technology used, the network manager 440 advantageously ensure that communications between the chiplets 110 and other components are efficient, reliable, and secure. This may involve implementing error correction and flow control mechanisms, prioritizing different types of data, and handling issues such as congestion or network failures.

In the context of the proposed architecture, during the microsystem instantiation, the integration and testing of microsystems 200 and the individual chiplets 110 into a larger system will generally take place. Thus, in order to ensure that the overall system functions correctly, a robust system test strategy is advantageously in place. The most commonly built-in system test strategies that may be employed for microsystem instantiation in chiplet technology are software code unitests, Built-in Self-Test (BIST), boundary Scan, Error Correction Codes (ECC) and Post-Silicon Validation.

Regarding software code unitests, in this case, the microsytem's code introduced in the service request istested to ensure the correct microsystem's operation. These tests may be included in the service request in the form of unitests.

BIST involves the design of self-test circuits and mechanisms that may perform diagnostic tests and identify any defects or issues within a chiplet 110. BIST may be useful in detecting faults in various parts of the chiplet arrangement 100, such as memory arrays or logic blocks.

Boundary scan involves incorporating boundary scan cells into the chiplet design. These cells may be used to perform structural tests on the chiplet arrangement 100 and may assist in identifying any faults in the interconnects between the chiplets 110.

ECC may be incorporated into the chiplet design to detect and correct errors that may occur in the chiplet's memory or data paths.

Once the chiplets 110 are integrated into the larger system, extensive post-silicon validation testing may be performed to ensure that the system is functioning as expected. This may include running a suite of functional tests, performance tests, and stress tests to verify the system's reliability and robustness.

When a microsystem 200 or all its associated microservices 400 are no longer requested or needed, the microsystem may be released. This means the hardware resources 112 are released from (disassociated with) the microsystem 200 and control plane 300 is updated to reflect the release of the microsystem 200.

The life cycle of a microsystem 200 may be divided into four phases, (1) microsystem instantiation, (2) service onboarding, (3) operation, and (4) release. The utilization of resources over these phases varies. The computation and communication between components in the control plane 300 may result in overhead and delays, however, the heaviest load is localized in the first two phases. The instantiation and onboarding are transitory phases only necessary when the chiplet arrangement 100 is updated or reused for other functions. Therefore, the operation stays unaffected by the new architecture, once the microsystems 200 are instantiated and the chiplets 110 communicate via the microservices 400, the electronic systems proceed to work as a monolithic architecture.

The microservice-based chiplet implementation presented herein may be employed within a vast number of fields.

Within telecommunications, the microservice-based chiplet arrangement 100 presented herein may be used in telecommunications systems to provide different functionalities such as network processors/processes, communications blocks and RF systems, routing, switching, security, etc. This allows the industry to easily swapped out or replaced newer versions as they are designed to be independent of the overall system.

Within automotive the microservice-based chiplet arrangement 100 may be used in automotive systems to provide different functionalities such as driver assistance, navigation, entertainment, health monitoring, infotainment systems, autonomous driving systems, maintenance systems, power/energy management systems etc. The implementations may be easily integrated into the system as services, making the overall design process more modular and flexible.

Within industrial automation microservice-based chiplet arrangement 100 may be used in industrial automation systems to provide different functionalities such as control (in-house and remote), monitoring, data analysis, machine vision, condition monitoring, predictive maintenance, etc. As mentioned earlier, the microservice-based chiplet arrangement 100 may be easily integrated into the system as services, making the overall design process more modular and flexible thus, will help in serving the Industry 4.0 concept.

Within high-performance computing microservice-based chiplet arrangement 100 may be used to build high-performance computing systems that may handle large amounts of data and perform complex computations, system management, fault tolerance, AI/HW accelerations, memory management, energy managment, etc.

Within artificial intelligence (AI), microservice-based chiplet arrangement 100 may contribute in building AI-based systems that will be capable to perform complex tasks such as image and speech recognition, natural language processing, federated learning, security, explainability, edge computing, optimization etc.

Within robotics, microservice-based chiplet arrangement 100 would make adaptability of robotics according to changing environments and requirements easier due to the modular and flexible build offered by the concept herein by providing motor control, sensor fusion, computer vision, edge intelligence, energy management etc.

Within consumer electronics, microservice-based chiplet arrangement 100 offers the capability to shift control of the system to the consumers. Thus, the consumer may design and reuse the gadget according to their needs.

It should be mentioned that the above are just a few examples of the fields where microservice-based chiplets arrangements 100 are of great importance. There are many more possible use cases across different domains. This is all enabled due to the key aspect of the microservice-based chiplet arrangement 100 of providing a way that manages the communication and interactions between different chiplets and microsystems in a more modular, flexible and scalable way.

The embodiments, examples, features and concepts presented herein enables an architecture wherein a control plane 300 may organize and instantiate (e.g. orchestrate) any suitable hardware and/or software resources in the form of microsystems 200. These microsystems 200 may be configured to consume one or more microservices 400 and/or produce one or more microservices 400.

Modifications and other variants of the described embodiments will come to mind to one skilled in the art having benefit of the teachings presented in the foregoing description and associated drawings. Therefore, it is to be understood that the embodiments are not limited to the specific example embodiments described in this disclosure and that modifications and other variants are intended to be included within the scope of this disclosure. For example, while embodiments of the invention have been described with reference to chiplets and chiplet arrangements, persons skilled in the art will appreciate that the embodiments of the invention can equivalently be applied to any suitable computer system and not specifically to chiplets.

As a mere example, it is conceivable to provide a computer system controllable by an external communications interface. The computer system comprises a plurality hardware resource, each providing at least one dedicated hardware functionality. The hardware resources are connected by a hardware network. The computer system is provided with a control plane configured to orchestrate one or more microsystems, each microsystem comprising at least one hardware resource and an addressable connection at the network. The control plane is further configured to expose one or more microsystems as microservices at the external communications interface.

Furthermore, although specific terms may be employed herein, they are used in a generic and descriptive sense only and not for purposes of limitation. Therefore, a person skilled in the art would recognize numerous variations to the described embodiments that would still fall within the scope of the appended claims. Furthermore, although individual features may be included in different claims (or embodiments), these may possibly advantageously be combined, and the inclusion of different claims (or embodiments) does not imply that a combination of features is not feasible and/or advantageous. In addition, singular references do not exclude a plurality. Finally, reference signs in the claims are provided merely as a clarifying example and should not be construed as limiting the scope of the claims in any way.

## Claims

1. A chiplet arrangement (100) controllable by an external communications interface (150), wherein the chiplet arrangement (100) comprises at least two chiplets (110) connected to a chiplet network (120), and wherein at least one chiplet (110) comprises at least two hardware resources (112); and wherein the chiplet arrangement (100) is provided with a chiplet control plane (300) comprising:
- a resource orchestrator (410) configured to instantiate one or more microsystems (200) with a respective associated microservice (400) of the chiplet arrangement (100), wherein each microsystem (200) comprising at least two hardware resources (112) and an addressable connection at the chiplet network (120), wherein the at least two hardware resources (112) are from two or more chiplets (110) of the chiplet arrangement (100),
- a resource registry (430) comprising data indicating at least some of the hardware resources (112) of the chiplet arrangement (100), wherein the resource registry (430) further comprises hardware resources (112) available at a specific moment in time, a type of hardware resources (112), and their technical characteristics, and
- a network manager (440) configured to control communication between the microsystems (200) and the external communications interface (150) of the chiplet arrangement (100) by exposing microservices (400) associated with the respective microsystems (200) at the external communications interface (150)%
wherein the control plane (300) is configured to deploy and manage microservices (400) on available hardware resources (112) by their associated microsystem (200) **characterized by:**
- the control plane (300) further comprising a resource scheduler,
- the resource orchestrator (410) being configured to receive a service request with a microsystem recipe (105), wherein the microsystem recipe (105) comprises data required to instantiate a new microsystem (200) and its microservice (400),
- the resource orchestrator (410) being configured to query the resource registry (430) for available hardware resources (112) that match the microsystem recipe (105),
- the resource orchestrator (410) being configured to examine a list of resources available and select the ones that fulfill the requirements for that specific microsystem recipe (105),
- the resource orchestrator (410) being further configured to, after determining a selection of hardware resources (112) that will conform to the requirements of the microsystem recipe (105), requests to the resource scheduler (420) the assignation of scheduled time and slots,
- whereby the result of the operations of the resource scheduler (420) provide microsystem deployment data, wherein the microsystem deployment data is provided to the network manager (440), and
- the network manager (440) being configured to, based on the microsystem deployment data, deploy a communication integration between orchestrated hardware resources (112) and commence execution of the instantiated microsystem (200).

2. The chiplet arrangement (100) of claim 1, wherein the resource orchestrator (410) is configured to configure instantiation of microsystems (200) based on availability and/or utilization of hardware resource(s) (112).

3. The chiplet arrangement (100) of any one of claim 1 or 2, wherein the resource orchestrator (410) is configured to configure instantiation of microservices (400) based on availability and/or utilization of hardware resource(s) (112).

4. The chiplet arrangement (100) of any one of claim 1 to 3, wherein the resource orchestrator (410) comprises a preconfigured microsystem (200) of the chiplet arrangement (100) associated with one or more preconfigured microservices (400) of the chiplet arrangement (100).

5. The chiplet arrangement (100) of any one of claim 1 to 4, wherein at least one microsystem (200) is configured to consume or produce one or more microservices (400) associated with the at least one microsystem (200).

6. The chiplet arrangement (100) of any one of claims 1 to 5, wherein the network manager (440) is configured to configure communication between integrated hardware resources (112) based on orchestration information provided by the resource orchestrator (410).

7. The chiplet arrangement (100) of any one of claims 1 to 6, wherein the network manager (440) is a preconfigured microsystem (200) of the chiplet arrangement (100) associated with one or more preconfigured microservices (400) of the chiplet arrangement (100).

8. The chiplet arrangement (100) of any one of claim 1 to 7, wherein the resource registry (430) comprises data indicating all hardware resources (112) of all chiplets (110) of the chiplet arrangement (100).

9. The chiplet arrangement (100) of any one of claim 1 to 8, wherein the control plane (300) comprises a resource scheduler (420) configured to schedule utilization of the hardware resources (112).

10. The chiplet arrangement (100) of claim 9, wherein the resource scheduler (420) is a preconfigured microsystem (200) of the chiplet arrangement (100) associated with one or more preconfigured microservices (400) of the chiplet arrangement (100).

11. The chiplet arrangement (100) of any one of claim 1 to 10, wherein at least one hardware resources (112) is a network interface configured to connect the chiplet (110) to the chiplet network (120).

12. The chiplet arrangement (100) of any one of claim 1 to 11, wherein at least one hardware resources (112) is a computational hardware resource such as a CPU, a GPU or a microcontroller, and/or wherein at least one hardware resource (112) is a memory hardware resource such as a volatile memory or a non-volatile memory, and/or wherein at least one hardware resource (112) is a sensor hardware resource (112) such as a temperature sensor, a pressure sensor, a light sensor, an optical sensor or a fingerprint sensor, and/or wherein at least one hardware resource (112) is a peripheral hardware resource (112) such as an interrupt controller, a DMA controller, a Digital I/O, a DAC, an ADC or a clock, and/or wherein at least one hardware resource (112) is a communication hardware resource (112) such as an I2C interface, a PCIe interface or a UCIe interface, and/or wherein at least one hardware resource (112) is an actuator hardware resource (112) such as a loudspeaker, a buzzer, a light source or a display.

13. The chiplet arrangement (100) of any one of claim 1 to 12, wherein each hardware resource (112) provide at least one dedicated hardware functionality.

14. The chiplet arrangement (100) of any one of claim 1 to 13, wherein the chiplet arrangement (100) is a chiplet package forming part of an integrated circuit, IC.

## Patentansprüche

1. Eine Chiplet-Anordnung (100), die über eine externe Kommunikationsschnittstelle (150), steuerbar ist, wobei die Chiplet-Anordnung (100) mindestens zwei Chiplets (110) umfasst, die mit einem Chiplet-Netzwerk (120) verbunden sind, und wobei mindestens ein Chiplet (110) mindestens zwei Hardware-Ressourcen (112) umfasst; und wobei die Chiplet-Anordnung (100) mit einer Chiplet-Steuerungsebene (300) versehen ist, umfassend:
einen Ressourcenorchestrator (410), der eingerichtet ist, um ein oder mehrere Mikrosysteme (200) mit einem jeweils zugehörigen Mikrodienst (400) der Chiplet-Anordnung (100) zu instanziieren, wobei jedes Mikrosystem (200) mindestens zwei Hardware-Ressourcen (112) und eine adressierbare Verbindung im Chiplet-Netzwerk (120) umfasst, wobei die mindestens zwei Hardware-Ressourcen (112) aus zwei oder mehr Chiplets (110) der Chiplet-Anordnung (100) stammen,
ein Ressourcenverzeichnis (430), das Daten umfasst, die mindestens einige der Hardware-Ressourcen (112) der Chiplet-Anordnung (100) anzeigen, wobei das Ressourcenverzeichnis (430) ferner Hardware-Ressourcen (112), die zu einem bestimmten Zeitpunkt verfügbar sind, einen Typ der Hardware-Ressourcen (112) und deren technische Merkmale umfasst, und
einen Netzwerkmanager (440), der eingerichtet ist, um die Kommunikation zwischen den Mikrosystemen (200) und der externen Kommunikationsschnittstelle (150) der Chiplet-Anordnung (100) zu steuern, indem er Mikrodienste (400), die den jeweiligen Mikrosystemen (200) zugeordnet sind, an der externen Kommunikationsschnittstelle (150) exponiert,
wobei die Steuerungsebene (300) eingerichtet ist, um Mikrodienste (400) auf verfügbaren Hardware-Ressourcen (112) durch deren zugeordnetes Mikrosystem (200) bereitzustellen und zu verwalten,
**dadurch gekennzeichnet, dass**:
die Steuerungsebene (300) ferner einen Ressourcenplaner umfasst,
der Ressourcenorchestrator (410) eingerichtet ist, um eine Dienstanforderung mit einem Mikrosystemrezept (105) zu empfangen, wobei das Mikrosystemrezept (105) Daten umfasst, die zur Instanziierung eines neuen Mikrosystems (200) und dessen Mikrodienstes (400) erforderlich sind,
der Ressourcenorchestrator (410) eingerichtet ist, um das Ressourcenverzeichnis (430) nach verfügbaren Hardware-Ressourcen (112) abzufragen, die dem Mikrosystemrezept (105) entsprechen,
der Ressourcenorchestrator (410) eingerichtet ist, eine Liste verfügbarer Ressourcen zu prüfen und diejenigen auszuwählen, die die Anforderungen des spezifischen Mikrosystemrezepts (105) erfüllen,
der Ressourcenorchestrator (410) ferner eingerichtet ist, nach Bestimmung einer Auswahl an Hardware-Ressourcen (112), die den Anforderungen des Mikrosystemrezepts (105) genügen, beim Ressourcenplaner (420) die Zuweisung geplanter Zeit und Zeitfenster anzufordern,
wobei das Ergebnis der Vorgänge des Ressourcenplaners (420) Mikrosystembereitstellungsdaten liefert, wobei die Mikrosystembereitstellungsdaten dem Netzwerkmanager (440) bereitgestellt werden, und
der Netzwerkmanager (440) eingerichtet ist, basierend auf den Mikrosystembereitstellungsdaten eine Kommunikationsintegration zwischen orchestrierten Hardware-Ressourcen (112) bereitzustellen und die Ausführung des instanziierten Mikrosystems (200) zu beginnen.

2. Die Chiplet-Anordnung (100) nach Anspruch 1, wobei der Ressourcenorchestrator (410) eingerichtet ist, um die Instanziierung von Mikrosystemen (200) basierend auf Verfügbarkeit und/oder Auslastung von Hardware-Ressource(n) (112) zu konfigurieren.

3. Die Chiplet-Anordnung (100) nach einem der Ansprüche 1 oder 2, wobei der Ressourcenorchestrator (410) eingerichtet ist, um die Instanziierung von Mikrodiensten (400) basierend auf Verfügbarkeit und/oder Auslastung von Hardware-Ressource(n) (112) zu konfigurieren.

4. Die Chiplet-Anordnung (100) nach einem der Ansprüche 1 bis 3, wobei der Ressourcenorchestrator (410) ein vorkonfiguriertes Mikrosystem (200) der Chiplet-Anordnung (100) umfasst, das mit einem oder mehreren vorkonfigurierten Mikrodiensten (400) der Chiplet-Anordnung (100) verbunden ist.

5. Die Chiplet-Anordnung (100) nach einem der Ansprüche 1 bis 4, wobei mindestens ein Mikrosystem (200) eingerichtet ist, um einen oder mehrere Mikrodienste (400) zu konsumieren oder zu erzeugen, die dem mindestens einen Mikrosystem (200) zugeordnet sind.

6. Die Chiplet-Anordnung (100) nach einem der Ansprüche 1 bis 5, wobei der Netzwerkmanager (440) eingerichtet ist, um die Kommunikation zwischen integrierten Hardware-Ressourcen (112) basierend auf Orchestrierungsinformationen des Ressourcenorchestrators (410) zu konfigurieren.

7. Die Chiplet-Anordnung (100) nach einem der Ansprüche 1 bis 6, wobei der Netzwerkmanager (440) ein vorkonfiguriertes Mikrosystem (200) der Chiplet-Anordnung (100) ist, das mit einem oder mehreren vorkonfigurierten Mikrodiensten (400) der Chiplet-Anordnung (100) verbunden ist.

8. Die Chiplet-Anordnung (100) nach einem der Ansprüche 1 bis 7, wobei das Ressourcenverzeichnis (430) Daten umfasst, die alle Hardware-Ressourcen (112) aller Chiplets (110) der Chiplet-Anordnung (100) anzeigen.

9. Die Chiplet-Anordnung (100) nach einem der Ansprüche 1 bis 8, wobei die Steuerungsebene (300) einen Ressourcenplaner (420) umfasst, der eingerichtet ist, um die Nutzung der Hardware-Ressourcen (112) zu planen.

10. Die Chiplet-Anordnung (100) nach Anspruch 9, wobei der Ressourcenplaner (420) ein vorkonfiguriertes Mikrosystem (200) der Chiplet-Anordnung (100) ist, das mit einem oder mehreren vorkonfigurierten Mikrodiensten (400) der Chiplet-Anordnung (100) verbunden ist.

11. Die Chiplet-Anordnung (100) nach einem der Ansprüche 1 bis 10, wobei mindestens eine Hardware-Ressource (112) eine Netzwerkschnittstelle ist, die eingerichtet ist, um das Chiplet (110) mit dem Chiplet-Netzwerk (120) zu verbinden.

12. Die Chiplet-Anordnung (100) nach einem der Ansprüche 1 bis 11, wobei mindestens eine Hardware-Ressource (112) eine rechentechnische Hardware-Ressource ist, wie beispielsweise eine CPU, eine GPU oder ein Mikrocontroller, und/oder wobei mindestens eine Hardware-Ressource (112) eine Speicherhardware-Ressource ist, wie beispielsweise ein flüchtiger Speicher oder ein nichtflüchtiger Speicher, und/oder wobei mindestens eine Hardware-Ressource (112) eine Sensorhardware-Ressource (112) ist, wie beispielsweise ein Temperatursensor, ein Drucksensor, ein Lichtsensor, ein optischer Sensor oder ein Fingerabdrucksensor, und/oder wobei mindestens eine Hardware-Ressource (112) eine Peripherie-Hardware-Ressource (112) ist, wie beispielsweise ein Interrupt-Controller, ein DMA-Controller, ein digitales I/O, ein DAC, ein ADC oder eine Uhr, und/oder wobei mindestens eine Hardware-Ressource (112) eine Kommunikationshardware-Ressource (112) ist, wie beispielsweise eine I2C-Schnittstelle, eine PCIe-Schnittstelle oder eine UCIe-Schnittstelle, und/oder wobei mindestens eine Hardware-Ressource (112) eine Aktuatorhardware-Ressource (112) ist, wie beispielsweise ein Lautsprecher, ein Summer, eine Lichtquelle oder ein Display.

13. Die Chiplet-Anordnung (100) nach einem der Ansprüche 1 bis 12, wobei jede Hardware-Ressource (112) mindestens eine dedizierte Hardware-Funktionalität bereitstellt.

14. Die Chiplet-Anordnung (100) nach einem der Ansprüche 1 bis 13, wobei die Chiplet-Anordnung (100) ein Chiplet-Paket ist, das Teil einer integrierten Schaltung (IC) bildet.

## Revendications

1. Agencement de micropuces (« chiplet ») (100) pouvant être commandé par une interface de communication externe (150), dans lequel l'agencement de micropuces (100) comprend au moins deux micropuces (110) connectées à un réseau de micropuces (120), et dans lequel au moins une micropuce (110) comprend au moins deux ressources matérielles (112) ; et dans lequel l'agencement de micropuces (100) est pourvu d'un plan de commande de micropuces (300) comprenant :
- un orchestrateur de ressources (410) configuré pour instancier un ou plusieurs microsystèmes (200) avec un microservice (400) associé respectif de l'agencement de micropuces (100), dans lequel chaque microsystème (200) comprenant au moins deux ressources matérielles (112) et une connexion adressable au réseau de micropuces (120), dans lequel les au moins deux ressources matérielles (112) proviennent de deux micropuces (110) ou plus de l'agencement de micropuces (100),
- un registre de ressources (430) comprenant des données indiquant au moins certaines des ressources matérielles (112) de l'agencement de micropuces (100), dans lequel le registre de ressources (430) comprend en outre des ressources matérielles (112) disponibles à un moment spécifique, un type de ressources matérielles (112), et leurs caractéristiques techniques, et
- un gestionnaire de réseau (440) configuré pour commander la communication entre les microsystèmes (200) et l'interface de communication externe (150) de l'agencement de micropuces (100) en exposant des microservices (400) associés aux microsystèmes (200) respectifs au niveau de l'interface de communication externe (150),
dans lequel le plan de commande (300) est configuré pour déployer et gérer des microservices (400) sur des ressources matérielles (112) disponibles par leur microsystème (200) associé **caractérisé par** :
- le plan de commande (300) comprenant en outre un planificateur de ressources,
- l'orchestrateur de ressources (410) étant configuré pour recevoir une demande de service avec une recette de microsystème (105), dans lequel la recette de microsystème (105) comprend des données nécessaires pour instancier un nouveau microsystème (200) et son microservice (400),
- l'orchestrateur de ressources (410) étant configuré pour interroger le registre de ressources (430) en ce qui concerne des ressources matérielles (112) disponibles qui correspondent à la recette de microsystème (105),
- l'orchestrateur de ressources (410) étant configuré pour examiner une liste de ressources disponibles et sélectionner celles qui remplissent les exigences pour cette recette de microsystème (105) spécifique,
- l'orchestrateur de ressources (410) étant en outre configuré pour, après avoir déterminé une sélection de ressources matérielles (112) qui seront conformes aux exigences de la recette de microsystème (105), demander au planificateur de ressources (420) l'attribution d'heures et de créneaux planifiés,
- dans lequel le résultat des opérations du planificateur de ressources (420) fournit des données de déploiement de microsystème, dans lequel les données de déploiement de microsystème sont fournies au gestionnaire de réseau (440), et
- le gestionnaire de réseau (440) étant configuré pour, sur la base des données de déploiement de microsystème, déployer une intégration de communication entre des ressources matérielles (112) orchestrées et commencer une exécution du microsystème (200) instancié.

2. Agencement de micropuces (100) selon la revendication 1, dans lequel l'orchestrateur de ressources (410) est configuré pour configurer une instanciation de microsystèmes (200) sur la base d'une disponibilité et/ou d'une utilisation de ressource(s) matérielle(s) (112).

3. Agencement de micropuces (100) selon l'une quelconque de la revendication 1 ou 2, dans lequel l'orchestrateur de ressources (410) est configuré pour configurer une instanciation de microservices (400) sur la base d'une disponibilité et/ou d'une utilisation de ressource(s) matérielle(s) (112).

4. Agencement de micropuces (100) selon l'une quelconque des revendications 1 à 3, dans lequel l'orchestrateur de ressources (410) comprend un microsystème (200) préconfiguré de l'agencement de micropuces (100) associé à un ou plusieurs microservices (400) préconfigurés de l'agencement de micropuces (100).

5. Agencement de micropuces (100) selon l'une quelconque des revendications 1 à 4, dans lequel au moins un microsystème (200) est configuré pour consommer ou produire un ou plusieurs microservices (400) associés à l'au moins un microsystème (200).

6. Agencement de micropuces (100) selon l'une quelconque des revendications 1 à 5, dans lequel le gestionnaire de réseau (440) est configuré pour configurer une communication entre des ressources matérielles (112) intégrées sur la base d'informations d'orchestration fournies par l'orchestrateur de ressources (410).

7. Agencement de micropuces (100) selon l'une quelconque des revendications 1 à 6, dans lequel le gestionnaire de réseau (440) est un microsystème (200) préconfiguré de l'agencement de micropuces (100) associé à un ou plusieurs microservices (400) préconfigurés de l'agencement de micropuces (100).

8. Agencement de micropuces (100) selon l'une quelconque des revendications 1 à 7, dans lequel le registre de ressources (430) comprend des données indiquant toutes les ressources matérielles (112) de toutes les micropuces (110) de l'agencement de micropuces (100).

9. Agencement de micropuces (100) selon l'une quelconque des revendications 1 à 8, dans lequel le plan de commande (300) comprend un planificateur de ressources (420) configuré pour planifier une utilisation des ressources matérielles (112).

10. Agencement de micropuces (100) selon la revendication 9, dans lequel le planificateur de ressources (420) est un microsystème (200) préconfiguré de l'agencement de micropuces (100) associé à un ou plusieurs microservices (400) préconfigurés de l'agencement de micropuces (100).

11. Agencement de micropuces (100) selon l'une quelconque des revendications 1 à 10, dans lequel au moins une ressource matérielle (112) est une interface réseau configurée pour connecter la micropuce (110) au réseau de micropuces (120).

12. Agencement de micropuces (100) selon l'une quelconque des revendications 1 à 11, dans lequel au moins une ressource matérielle (112) est une ressource matérielle de calcul telle qu'une CPU, un GPU ou un microcontrôleur, et/ou dans lequel au moins une ressource matérielle (112) est une ressource matérielle de mémoire telle qu'une mémoire volatile ou une mémoire non volatile, et/ou dans lequel au moins une ressource matérielle (112) est une ressource matérielle de capteur (112) telle qu'un capteur de température, un capteur de pression, un capteur de lumière, un capteur optique ou un capteur d'empreinte digitale, et/ou dans lequel au moins une ressource matérielle (112) est une ressource matérielle (112) périphérique telle qu'un contrôleur d'interruption, un contrôleur DMA, une E/S numérique, un DAC, un ADC ou une horloge, et/ou dans lequel au moins une ressource matérielle (112) est une ressource matérielle de communication (112) telle qu'une interface I2C, une interface PCIe ou une interface UCIe, et/ou dans lequel au moins une ressource matérielle (112) est une ressource matérielle (112) d'actionneur telle qu'un haut-parleur, un avertisseur sonore, une source lumineuse ou un écran.

13. Agencement de micropuces (100) selon l'une quelconque des revendications 1 à 12, dans lequel chaque ressource matérielle (112) fournit au moins une fonctionnalité matérielle dédiée.

14. Agencement de micropuces (100) selon l'une quelconque des revendications 1 à 13, dans lequel l'agencement de micropuces (100) est un boîtier de micropuces faisant partie d'un circuit intégré, IC.
